# EUROPÄISCHE PATENTSCHRIFT

(11) **EP 3 189 010 B1**
(45) Veröffentlichungstag und Bekanntmachung des Hinweises auf die Patenterteilung: **21.11.2018**
(21) Anmeldenummer: 15759771.7
(22) Anmeldetag: 04.09.2015
(51) Int. Cl.: C01G 49/06, C09C 1/24

(54) **HERSTELLUNG VON EISENOXID-ROT-PIGMENT**
PRODUCTION OF IRON OXIDE RED PIGMENT
FABRICATION DE PIGMENT ROUGE D'OXYDE DE FER

(30) Priorität: 05.09.2014 EP 14183796
(43) Veröffentlichungstag der Anmeldung: 12.07.2017
(73) Patentinhaber: Lanxess Deutschland GmbH, 50569 Köln (DE)
(72) Erfinder: CZAPLIK, Waldemar, 41748 Viersen (DE); KETTELER, Guido, 40627 Düsseldorf (DE); KISCHKEWITZ, Jürgen, 40883 Ratingen (DE)
(86) Internationale Anmeldenummer: PCT/EP2015/070198
(87) Internationale Veröffentlichungsnummer: WO 2016/034692

(56) Entgegenhaltungen:
- EP-A1- 1 293 480
- WO-A1-2013/045608
- US-A- 3 946 103
- DATABASE WPI Week 199948 Thomson Scientific, London, GB; AN 1999-562567 XP002735745, -& CN 1 223 966 A (SANHUAN PIGMENT CO LTD HUNAN PROV) 28. Juli 1999 (1999-07-28)
- DATABASE WPI Week 200627 Thomson Scientific, London, GB; AN 2006-254807 XP002735746, -& CN 1 699 477 A (UNIV SOUTH CHINA TECHNOLOGY) 23. November 2005 (2005-11-23)

## Beschreibung

Die vorliegende Erfindung betrifft ein verbessertes Verfahren zur Herstellung von Eisenoxid-Rot-Pigmenten nach dem Penniman-Verfahren mit Nitrat (auch Nitrat-Verfahren oder Direkt-Rot-Verfahren genannt).

Eisenoxide finden in vielen technischen Bereichen Anwendung. So werden sie beispielsweise als Farbpigmente in Keramiken, Baustoffen, Kunststoffen, Farben, Lacken und Papier eingesetzt, dienen als Grundlage für verschiedene Katalysatoren oder Trägermaterialien, können Schadstoffe adsorbieren oder absorbieren. Magnetische Eisenoxide finden Anwendungen in Magnetspeichermedien, Tonern, Ferrofluiden oder in medizinischen Anwendungen wie beispielsweise als Kontrastmittel für die Magnetresonanztomografie.

Eisenoxide lassen sich durch wässrige Fällungs- und Hydrolysereaktionen von Eisensalzen erhalten (Ullmann's Encyclopedia of Industrial Chemistry, VCH Weinheim 2006, Chapter 3.1.1. Iron Oxide Pigments, S. 61-67). Eisenoxidpigmente über den Fällungsprozess werden aus Eisensalzlösungen und alkalischen Verbindungen in Gegenwart von Luft erzeugt. Durch gezielte Steuerung der Reaktion lassen sich so auch feinteilige Goethit-, Magnetit- und Maghämit-Partikel darstellen. Die durch dieses Verfahren hergestellten Rotpigmente weisen jedoch eine vergleichsweise geringe Farbsättigung auf und finden ihren Einsatz deshalb vornehmlich in der Baustoffindustrie.

Die wässrige Herstellung von feinteiligem Hämatit, der der Modifikation α-Fe₂O₃ entspricht, ist jedoch deutlich aufwändiger. Durch Verwendung eines Reifungsschritts lässt sich unter Zugabe eines feinteiligen Eisenoxids der Modifikation Maghämit, γ-Fe₂O₃, oder Lepidocrocite, γ-FeOOH, als Keim auch durch eine direkte wässrige Fällung Hämatit herstellen [US 5,421,878; EP0645437; WO 2009/100767].

Eine weitere Methode zur Herstellung von Eisenoxid-Rot-Pigmenten ist der sogenannte Penniman-Prozess (US 1,327,061; US 1,368,748; US 2,937,927; EP 1106577A; US 6,503,315, EP 1 293 480 A1, WO 2013/045608 A1). Dabei werden Eisenoxidpigmente dadurch hergestellt, dass Eisenmetall unter Zusatz eines Eisensalzes und eines Eisenoxidkeims gelöst und oxidiert wird. So ist in SHEN, Qing; SUN, Fengzhi; Wujiyan Gongye 1997, (6), 5 - 6 (CH), Wujiyan Gongye Bianjib, (CA 128:218378n) ein Verfahren bekannt geworden, bei dem verdünnte Salpetersäure bei erhöhter Temperatur auf Eisen einwirkt. Hierbei entsteht eine Hämatit-Keimsuspension. Diese wird auf an sich bekannte Weise zu einer Suspension von Rotpigment aufgebaut, das Pigment wird aus dieser Suspension, falls gewünscht, auf an sich übliche Weise isoliert. Die durch dieses Verfahren hergestellten Rotpigmente weisen jedoch eine vergleichsweise geringe Farbsättigung auf, die ähnlich der Farbsättigung einer kommerziellen 130er-Norm sind, und finden ihren Einsatz deshalb vornehmlich in der Baustoffindustrie. Die 130er-Norm entspricht dem für Eisenoxidpigment-Farbmessungen gebräuchlichem Referenzstandard Bayferrox® 130.

EP 1106577A offenbart eine Variante des Penniman-Verfahrens umfassend die Einwirkung von verdünnter Salpetersäure auf Eisen bei erhöhter Temperatur zur Erzeugung von Keimen, d.h. feinteiligen Eisenoxiden mit einer Teilchengröße kleiner als oder gleich 100 nm. Die Reaktion von Eisen mit Salpetersäure ist eine komplexe Reaktion und kann je nach Versuchsbedingungen entweder zu einer Passivierung des Eisens und damit zu einem Stillstand der Reaktion führen oder zu einem Auflösen des Eisens unter Bildung von gelöstem Eisennitrat. Beide Reaktionswege sind nicht erwünscht, und die Herstellung von feinteiligem Hämatit gelingt nur unter eingeschränkten Versuchsbedingungen. EP 1106577A beschreibt derartige Bedingungen zur Herstellung von feinteiligem Hämatit. Dabei wird das Eisen mit verdünnter Salpetersäure bei Temperaturen zwischen 90 und 99°C zur Reaktion gebracht. WO 2013/045608 beschreibt ein Verfahren zur Herstellung von Eisenoxid-Rot-Pigmenten, bei dem der Reaktionsschritt der Herstellung der Keime, d.h. von feinteiligem Hämatit mit einer Teilchengröße kleiner als oder gleich 100 nm, verbessert wurde.

Das Penniman-Verfahren nach dem Stand der Technik wird in großtechnischem Maßstab bisher mit einfachen Mitteln durchgeführt. Beispielsweise wird der Pigmentaufbau, d.h. die Umsetzung von einer Hämatitkeim-Suspension mit Eisen unter Begasung mit Luft ohne mechanische oder hydraulische Durchmischung, durchgeführt. Nur die Begasung mit Luft führt hier zu einer starken Durchmischung der Reaktionsmischung. Das Penniman-Verfahren mit Salpetersäure wird in großtechnischem Maßstab (größer als 10 m³ Ansatzgröße) nach dem Stand der Technik typischerweise bei Begasungsvolumina von 7 bis 10 m³ pro Stunde und m³ Suspension durchgeführt, wodurch in der Reaktionsmischung eine starke Konvektion und eine starke Blasenbildung, vergleichbar einem starken Sieden einer Flüssigkeit, an der Oberfläche der Reaktionsmischung erzeugt wird. Die nach dem Penniman-Verfahren hergestellten Hämatitpigmente weisen üblicherweise in der für Eisenoxid-Pigmente üblichen sogenannten Lackabtestung in einem thixotropierten langöligen Alkydharz (in Anlehnung an DIN EN ISO 11664-4:2011-07 und DIN EN ISO 787-25:2007) einen a*-Wert im Purton von >25 CIELAB-Einheiten auf.

Diese an sich effizienten Verfahren, die eine direkte Herstellung von hochwertigen roten Eisenoxiden mit einer großen Variation der Farbwerte ermöglichen, weisen jedoch folgende Nachteile auf:
1. Emission von Stickoxiden. Stickoxide können giftig sein (z.B. die nitrosen Gase NO, NO₂ und N₂O₄, auch generell als "NOₓ" bezeichnet), erzeugen Smog, zerstören unter UV-Bestrahlung die Ozonschicht der Atmosphäre und sind Treibhausgase. Gerade Distickstoffmonoxid ist ein ca. um den Faktor 300 stärkeres Treibhausgas als Kohlendioxid. Distickstoffmonoxid wird außerdem mittlerweile als stärkster Ozonkiller betrachtet. Bei dem Penniman-Verfahren mit Salpetersäure entstehen sowohl die nitrosen Gase NO und NO₂ als auch Distickstoffmonoxid in nennenswerten Mengen.
2. Bei dem Penniman-Verfahren mit Salpetersäure werden stickstoffhaltige Abwässer erzeugt, die in nennenswerten Mengen Nitrate, Nitrite und Ammoniumverbindungen enthalten.
3. Das Penniman-Verfahren mit Salpetersäure ist sehr energieaufwändig, weil große Volumina wässriger Lösungen auf Temperaturen von 60°C bis 120°C durch externe Energiezufuhr erhitzt werden müssen. Zusätzlich wird durch den Eintrag von sauerstoffhaltigen Gasen als Oxidationsmittel in die Reaktionsmischung Energie aus dem Reaktionsgemisch ausgetragen (Dampf-Strippung), die wieder als Wärme zugeführt werden muss.

Stickoxide im Sinne der vorliegenden Erfindung sind Stickstoff-Sauerstoffverbindungen. Zu dieser Gruppe gehören die Nitrosen Gase der allgemeinen Formel NOₓ, wobei der Stickstoff unterschiedliche Oxidationszahlen zwischen +1 und +5 aufweisen kann. Beispiele hierfür sind NO (Stickstoffmonoxid, Oxidationszahl +2), NO₂ (Stickstoffdioxid, Oxidationszahl +4), N₂O₅ (Oxidationszahl +5). NO₂ steht mit dessen Dimer N₂O₄ (beide Oxidationszahl +IV) in einem temperatur- und druckabhängigem Gleichgewicht. Im Folgenden soll unter NO₂ sowohl NO₂ selbst als auch dessen Dimer N₂O₄ verstanden werden. N₂O (Distickstoffmonoxid, Lachgas, Oxidationszahl +1) gehört auch zu der Gruppe der Stickoxide, wird aber nicht zu den nitrosen Gasen gezählt.

Daher bestand die Aufgabe, ein effizientes und umweltfreundliches Verfahren zur Herstellung von Eisenoxid-Rot-Pigmenten bereitzustellen, das vorgenannte Nachteile vermeidet, wobei zum einen die Herstellung von Eisenoxid-Rot-Pigmenten mit einem breiten Farbspektrum in hoher Ausbeute erfolgt und wobei zum anderen der Anteil von an die Umwelt abgegebenen Stickoxiden und von an die Umwelt abgegebene Energie minimiert, und damit weniger Energie für die Herstellung der Eisenoxid-Rot-Pigmente erforderlich ist.

Es wurde nun ein Verfahren zur Herstellung von Eisenoxid-Rot-Pigmenten gefunden, das diese Aufgabe löst, sowie eine Vorrichtung bereitgestellt, in dem dieses Verfahren auch im industriellen Maßstab durchgeführt werden kann, umfassend zumindest die Umsetzung von
- zumindest Eisen mit
- einer wässrigen Hämatit-Keimsuspension, enthaltend Hämatit-Keime, die eine Teilchengröße von 100 nm oder weniger und eine spezifische BET-Oberfläche von 40 m²/g bis 150 m²/g (gemessen nach DIN 66131) aufweisen, und
- einer Eisen(II)nitratlösung

in Gegenwart von zumindest einem sauerstoffhaltigen Gas bei Temperaturen von 70 bis 99°C, wobei eine Hämatit-Pigmentsuspension erzeugt wird, wobei die Umsetzung unter Durchmischung der flüssigen Phase mittels hydraulischer Durchmischung mit Hilfe einer Pumpe erfolgt, wobei man die flüssige Phase aus dem Reaktor an einem Auslass entnimmt und dem Reaktor wieder an anderer Stelle an einem Einlass zuführt und die Begasung mit zumindest einem sauerstoffhaltigen Gas mit einer Begasungsvolumen von 6 m³ Gasvolumen / m³ Ansatzvolumen / Stunde oder weniger, bevorzugt von 0,2 bis 6 m³ Gasvolumen / m³ Ansatzvolumen / Stunde, besonders bevorzugt von 0,2 bis 5 m³ Gasvolumen / m³ Ansatzvolumen / Stunde, ganz besonders bevorzugt von 0,2 bis 3 m³ Gasvolumen / m³ Ansatzvolumen / Stunde, erfolgt. Der Gegenstand der vorliegenden Erfindung ist in den Ansprüchen 1-7 definiert. Die hierin beschriebenen Ausführungsformen, die nicht durch die Ansprüche abgedeckt sind, dienen lediglich der Veranschaulichung des technischen Kontextes der vorliegenden Erfindung.

In einer Ausführungsform wird die Umsetzung so lange durchgeführt, bis das Hämatit-Pigment den gewünschten Farbton aufweist. Der gewünschte Farbton wird bei Eisenoxid-Rotpigmentenüblicherweise in einer Lackabtestung mit einem thixotropierten langöligen Alkydharz (in Anlehnung an DIN EN ISO 11664-4:2011-07 und DIN EN ISO 787-25:2007) durchgeführt. Zur Prüfung der Farbwerte von anorganischen Buntpigmenten wird das Pigment in einer Bindemittelpaste auf Basis eines nichttrocknenden langöligen Alkydharz (L64) dispergiert. Die pigmentierte Paste wird in einen Pastenteller eingestrichen und anschließend im Vergleich zum Bezugspigment farbmetrisch ausgewertet. Dabei werden die Farbmaßzahlen und Farbabstände im angenähert gleichförmigen CIELAB-Farbenraum in Purton und Aufhellung ermittelt. Für den Farbton des Pigments stellen die a*- und b*-Werte in der Lackabtestung die am besten geeigneten Parameter dar.

In einer weiteren Ausführungsform umfasst das erfindungsgemäße Verfahren die Abtrennung des Hämatit-Pigments von der Hämatit-Pigmentsuspension nach üblichen Methoden.

Die Umsetzung von Eisen, Hämatit-Keimsuspension und Eisen(II)nitratlösung in Gegenwart von zumindest einem sauerstoffhaltigen Gas bei Temperaturen von 70 bis 99°C wird auch Pigmentaufbau genannt.

Die nach dem erfindungsgemäßen Verfahren hergestellten Eisenoxid-Rot-Pigmente weisen die Modifikation Hämatit (α-Fe₂O₃) auf und werden daher auch im Zusammenhang mit dieser Erfindung Hämatit-Pigmente genannt.

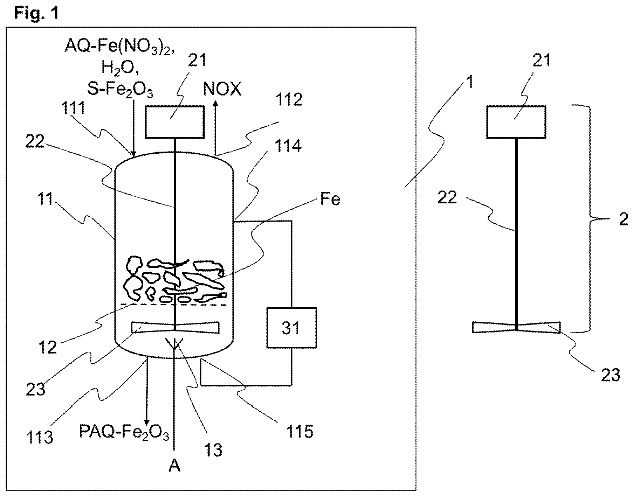

Der Pigmentaufbau gemäß des erfindungsgemäßen Verfahrens wird in einer Ausführungsform in einem Reaktor gemäß Figur 1 durchgeführt.

Die Erfindung umfasst weiterhin zur Durchführung des erfindungsgemäßen Verfahrens geeignete Vorrichtungen. Diese werden nachstehend anhand der Figur 1 näher erläutert.

In Figur 1 ist die Darstellung einer Vorrichtung wiedergegeben.

In Figur 1 bedeuten:
- A: sauerstoffhaltiges Gas
- Fe: Eisen
- AQ-Fe(NO₃)₂: Eisen(II)nitrat-Lösung
- S-Fe₂O₃: Hämatit-Keimsuspension
- PAQ- Fe₂O₃: Hämatit-Pigmentsuspension
- H₂O: Wasser
- NOX: stickoxidhaltiger Stoffstrom (Abgas aus der Herstellung der Hämatit-Pigmentsuspension)
- 1: Reaktor zur Herstellung von Hämatit-Pigmentsuspension
- 11: Reaktionsbehälter
- 12: Vorlage für Eisen
- 13: Begasungseinheit
- 111: Einlass für Eisen(II)nitrat-Lösung, Hämatit-Keimsuspension
- 112: Auslass für NOX
- 113: Auslass für Hämatit-Pigmentsuspension
- 114: Auslass für flüssige Phase
- 115: Einlass für flüssige Phase
- 2: Rühreinrichtung
- 21: Antrieb
- 22: Verbindung zwischen Antrieb und Rührorgan
- 23: Rührorgan
- 31: Pumpe

Reaktor **1** umfasst typischerweise einen oder mehrere Reaktionsbehälter aus Werkstoffen, die gegen die Einsatzstoffe beständig sind. Einfach Reaktionsbehälter können z.B. gemauerte oder geflieste in die Erde eingelassene Behälter sein. Die Reaktoren umfassen beispielsweise auch Behälter aus Glas, salpetersäurebeständigem Kunststoffen, wie z.B. Polytetrafluorethylen (PTFE), Stahl, z.B. emaillierter Stahl, kunststoff- oder lackbeschichteter Stahl, Edelstahl mit der Werkstoffnummer 1.44.01. Die Reaktionsbehälter können offen oder geschlossen sein. In bevorzugten Ausführungsformen der Erfindung sind die Reaktionsbehälter geschlossen. Die Reaktionsbehälter sind typischerweise für Temperaturen zwischen 0 und 150°C und für Drucke von 0,05 MPa (0,05 Megapascal entsprechen 0,5 bar) bis 1,5 MPa (1,5 Megapascal entsprechen 15 bar) ausgelegt.

Ein bevorzugter Reaktor **1** ist in Figur 1 wiedergegeben. Reaktor **1** weist zumindest Reaktionsbehälter **11,** Vorlage **12** für Eisen, Begasungseinheit **13** für das zumindest eine sauerstoffhaltige Gas **A,** Einlass **111** für zumindest Eisen(II)nitrat-Lösung und Hämatit-Keimsuspension, Auslass **112** für einen stickoxidhaltigen Stoffstrom **NOX,** Auslass **113** für die Hämatit-Pigmentsuspension, Auslass für flüssige Phase **114,** Einlass für flüssige Phase **115,** eine Rühreinrichtung **2** umfassend einen Antrieb **21,** eine Verbindung zwischen Antrieb und Rührorgan **22,** ein Rührorgan **23,** und eine Pumpe **31** auf. Auslass **114,** Einlass **115** und Pumpe **31** sind so über eine Leitung miteinander verbunden, dass die flüssige Phase darüber im Kreislauf aus dem Reaktionsbehälter **11** heraus und wieder in den Reaktionsbehälter **11** hinein gefördert werden kann.

Ein weiterer bevorzugter Reaktor **1** weist zumindest Reaktionsbehälter **11,** Vorlage **12** für Eisen, Begasungseinheit **13** für das zumindest eine sauerstoffhaltige Gas **A,** Einlass **111** für zumindest Eisen(II)nitrat-Lösung und Hämatit-Keimsuspension, Auslass **112** für einen stickoxidhaltigen Stoffstrom **NOX,** Auslass **113** für die Hämatit-Pigmentsuspension, eine Rühreinrichtung **2** umfassend einen Antrieb **21,** eine Verbindung zwischen Antrieb und Rührorgan **22** und ein Rührorgan **23** auf.

Ein weiterer bevorzugter Reaktor **1** weist zumindest Reaktionsbehälter **11,** Vorlage **12** für Eisen, Begasungseinheit **13** für das zumindest eine sauerstoffhaltige Gas **A,** Einlass **111** für zumindest Eisen(II)nitrat-Lösung und Hämatit-Keimsuspension, Auslass **112** für einen stickoxidhaltigen Stoffstrom **NOX,** Auslass **113** für die Hämatit-Pigmentsuspension, Auslass für flüssige Phase **114,** Einlass für flüssige Phase **115** und eine Pumpe **31** auf. Das erfindungsgemäße Verfahren wird im Folgenden detaillierter beschrieben. Unter mechanischer und/oder hydraulischer Durchmischung wird die Durchmischung der flüssigen Phase mittels geeigneten Vorrichtungen verstanden. Erfindungsgemäß enthält die flüssige Phase auch darin suspendierten Feststoffe wie die Hämatit-Keime oder das Hämatit-Pigment sowie weitere Feststoffe wie z.B. Eisenpartikel. Bei der mechanischen Durchmischung umfassen die geeigneten Vorrichtungen Rühreinrichtungen, beispielsweise Axialrührer, Radialrührer und Tangentialrührer. Rühreinrichtungen, wie Rühreinrichtung **2** in Figur 1, weisen zumindest ein Rührorgan, wie Rührorgan **23** in Figur 1, beispielsweise Propeller, Wendel oder Blätter, auf, die eine Strömung der flüssigen Phase erzeugen. Rühreinrichtungen weisen außerdem typischerweise einen Antrieb, wie Antrieb **21** in Figur 1, z.B. einen Motor, und eine Verbindung zwischen Rührorgan und Antrieb **22,** z.B. eine Welle oder eine magnetische Kopplung auf. Je nach Rührertyp werden Strömungen in radialer Richtung, d.h. rechtwinklig zur Rührachse, oder in axialer Richtung, d.h. parallel zur Rührachse, oder Mischungen davon erzeugt. Beispielsweise erzeugen Blattrührer bevorzugt radiale Strömungen, Schrägblattrührer und Propellerrührer axiale Strömungen. Axiale Strömungen können nach oben oder nach unten gerichtet sein. Im Rahmen der vorliegenden Erfindung wird eine mechanischer Durchmischung der flüssigen Phase bevorzugt, die axial von unten nach oben auf das Eisen gerichtet ist. Dadurch wird gewährleistet, dass auch die flüssige Phase, die sich in den Hohlräumen der Eisenteile befindet, mit der flüssigen Phase, die sich außerhalb der Hohlräume der Eisenteile befindet, durchmischt wird. Bevorzugt befindet sich das zumindest eine Rührorgan unterhalb und/oder oberhalb des Eisens. Ebenfalls bevorzugt sind als Rührer Axialrührer, besonders bevorzugt Schräg blattrührer oder Propellerrührer.

Bei radial wirkenden Rührorganen können zusätzlich Strömungsstörer an der Innenseite der Wand des Reaktionsbehälters **1** vorhanden sein. Dadurch wird Mitrotieren der flüssigen Phase und die dadurch auftretende Bildung von Tromben vermieden. Der Grad der mechanischen Durchmischung wird über die äußere Umfangsgeschwindigkeit des Rührorgans, beispielsweise des Rührorgans **23,** definiert. Bevorzugte Umfangsgeschwindigkeiten betragen 0,5 - 15 m/s, gemessen an dem Umfang des Kreises, der durch den Durchmesser des Rührorgans gebildet wird. Der Leistungseintrag in die flüssige Phase, der anhand der Leistungsaufnahme des Rührers abgeleitet werden kann, beträgt erfindungsgemäß 0,1 bis 5 kW pro m³-Ansatzvolumen, bevorzugt 0,4 bis 3 kW pro m³-Ansatzvolumen. Das Verhältnis von Rührorgandurchmesser zu Reaktorinnendurchmesser beträgt bevorzugt 0,1 bis 0,9. Der Leistungseintrag in die flüssige Phase errechnet sich aus der Leistungsaufnahme des Rührers multipliziert mit dem Wirkungsgrad des Rührers in Prozent. Typische Wirkungsgrade von Rührern, die im erfindungsgemäßen Verfahren eingesetzt werden, liegen zwischen 70 und 90%. Umfangsgeschwindigkeiten von 1 bis 15 m/s und ein Leistungseintrag von mindestens 0,4 kW/m³ Ansatzvolumen sind besonders bevorzugt.

Die erfindungsgemäße hydraulische Durchmischung erfolgt mit Hilfe einer Pumpe, beispielsweise Pumpe **31,** die die flüssige Phase aus dem Reaktor an einem Auslass, beispielsweise Auslass **114,** entnimmt und dem Reaktor wieder an anderer Stelle an einem Einlass, beispielsweise Einlass **115,** zuführt. An dem Ein- und Auslass sowie in dem gesamten Reaktionsgemisch werden hierbei Strömungen erzeugt. Im Rahmen der Erfindung werden Umpumpmengen von 0,1 bis 20 Ansatzvolumina/Stunde bevorzugt. Beispielsweise beträgt die Umpumpmenge bei 30 m³ Ansatzvolumen und einem Wert von 5 Ansatzvolumina / Stunde 150 m³ /Stunde. In einer weiteren Ausführungsform werden Umpumpmengen bevorzugt, die eine Strömungsgeschwindigkeit am Einlass, beispielsweise Einlass **115,** von mindestens 0,05 m/s, bevorzugt von mindestens 0,06 bis 15 m /s, erzeugen. Hierbei wird die Strömungsgeschwindigkeiten am Eingang direkt am Übergang der Leitung, aus der die umgepumpten flüssige Phase in die Reaktionsmischung im Reaktorinnenraum strömt, gemessen. In einer weiteren Ausführungsform ist die Strömung aus dem Einlass, beispielsweise Einlass **115,** auf die Eisenvorlage, beispielsweise Eisenvorlage **12,** gerichtet, bevorzugt von unterhalb der Eisenvorlage auf die Eisenvorlage gerichtet mit einem Abstand von weniger als 2 m, bevorzugt weniger als 1 m. In einer weiteren Ausführungsform ist der Einlass, beispielsweise Einlass **115,** als Rohrleitung oder als Zweistoffstrahler oder als Düse ausgeführt..

Es sei an dieser Stelle angemerkt, dass der Rahmen der Erfindung alle beliebigen und möglichen Kombinationen der oben stehenden und im Folgenden aufgeführten, allgemeinen Bereichen oder in Vorzugsbereichen genannten Komponenten, Wertebereiche bzw. Verfahrensparameter umfasst.

Die im erfindungsgemäßen Verfahren eingesetzten wässrigen Hämatit-Keimsuspensionen und die darin enthaltenen Hämatit-Keime sind aus dem Stand der Technik bekannt. Hierzu wird auf die Beschreibung des Standes der Technik verwiesen. Die in der wasserhaltigen Hämatit-Keimsuspension enthaltenen Hämatit-Keime umfassen solche mit einer Teilchengröße von 100 nm oder weniger und einer spezifische BET-Oberfläche von 40 m²/g bis 150 m²/g, (gemessen nach DIN 66131). Das Kriterium der Teilchengröße dann als erfüllt, wenn zumindest 90% der Hämatit-Keime eine Teilchengröße von 100 nm oder weniger, besonders bevorzugt von 30 nm bis 90 nm, aufweisen. Die im erfindungsgemäßen Verfahren eingesetzten wässrigen Hämatit-Keimsuspensionen umfassen typischerweise Hämatit-Keime mit einer runden, ovalen oder hexagonalen Teilchenform. Der feinteilige Hämatit weist typischerweise eine hohe Reinheit auf. Als Fremdmetalle sind in dem für die Herstellung der Hämatit-Keimsuspension eingesetzten Eisenschrott in der Regel Mangan, Chrom, Aluminium, Kupfer, Nickel, Kobalt, und/oder Titan in unterschiedlichsten Konzentrationen enthalten, die bei der Umsetzung mit Salpetersäure auch zu Oxiden oder Oxyhydroxiden gefällt und in den feinteiligen Hämatit eingebaut werden können. Typischerweise weisen die in der wasserhaltigen Hämatit-Keimsuspension enthaltenen Hämatit-Keime einen Mangangehalt von 0,1 bis 0,7 Gew.%, bevorzugt 0,4 bis 0,6 Gew.%, auf. Mit Keimen dieser Qualität lassen sich farbstarke rote Eisenoxidpigmente herstellen.

Die im erfindungsgemäßen Verfahren eingesetzten Eisen(II)nitratlösungen sind aus dem Stand der Technik bekannt. Hierzu wird auf die Beschreibung des Standes der Technik verwiesen. Typischerweise weisen diese Eisen(II)nitratlösungen Konzentrationen von 50 bis 150 g/l Fe(NO₃)₂ (Angabe Fe(NO₃)₂ bezogen auf wasserfreie Substanz) auf. Neben Fe(NO₃)₂ können die Eisen(II)nitrat-Lösungen auch Mengen von 0 bis 50 g/l Fe(NO₃)₃ enthalten. Vorteilhaft sind jedoch möglichst niedrige Mengen an Fe(NO₃)₃.

Als Eisen wird das erfindungsgemäße Verfahren gewöhnlich Eisen in Form von Draht, Blechen, Nägeln, Granalien oder groben Spänen eingesetzt. Dabei sind die einzelnen Teile von beliebiger Form und weisen üblicherweise eine Dicke (z.B. gemessen als Durchmesser eines Drahtes oder als Dicke eines Bleches) von ca. 0,1 Millimetern bis zu ca. 10 mm Millimetern auf. Die Größe von Drahtbündeln oder von Blechen, die in das Verfahren eingesetzt werden, bemisst sich üblicherweise nach praktikablen Gesichtspunkten. So muss der Reaktor mit diesem Einsatzmaterial ohne Schwierigkeiten befüllt werden können, was in der Regel durch ein Mannloch erfolgt. Solches Eisen wird unter anderem als Schrott, oder als Nebenprodukt in der Metallverarbeitungs-Industrie, beispielsweise Stanzbleche, erzeugt.

Das im erfindungsgemäßen Verfahren eingesetzte Eisen weist in der Regel einen Eisengehalt von >90 Gew% auf. Als Verunreinigungen treten in diesem Eisen üblicherweise Fremdmetalle wie z.B. Mangan, Chrom, Silizium, Nickel, Kupfer, und andere Elemente auf. Es kann jedoch auch ohne Nachteile Eisen mit einem höheren Reinheitsgrad eingesetzt werden. Typischerweise wird Eisen in einer Menge zwischen 20 und 150 g/l bezogen auf das Volumen der Reaktionsmischung zu Beginn der erfindungsgemäßen Umsetzung eingesetzt. In einer weiteren bevorzugten Ausführungsform wird das Eisen, bevorzugt in Form von Stanzblechen oder Drähten, auf der Eisenvorlage über deren Fläche mit einer bevorzugten Schüttdichte von kleiner 2000 kg/m³, besonders bevorzugt kleiner 1000 kg/m³ verteilt. Die Schüttdichte kann beispielsweise durch Biegen von Blechen zumindest einer Eisenqualität und/oder durch gezieltes Legen des Eisens realisiert werden. Dies führt dazu, dass typischerweise mehr als 90 Volumenprozent des unter der Eisenvorlage eingeblasenen sauerstoffhaltigen Gases die Eisenvorlage passiert, ohne dass sich das sauerstoffhaltige Gas unter der Eisenvorlage aufstaut.

Die Eisenvorlage, beispielsweise Vorlage **12,** ermöglicht einen Austausch von Suspension und Gas durch in der Eisenvorlage vorhandene Öffnungen. Typische Ausführungsformen für die Eisenvorlage können Siebböden, Lochböden oder Gitter darstellen. In einer Ausführungsform beträgt das Verhältnis zwischen der kumulierten Fläche an Öffnungen und der gesamten Vorlagefläche von 0,1 bis 0,9, bevorzugt von 0,1 bis 0,3. Die für den Suspensionsaustausch erforderlichen Löcher oder Öffnungen werden typischerweise so gewählt, dass Durchfallen des Eisens durch die Eisenvorlage weitestgehend vermieden wird. Die Eisenvorlage, beispielsweise Vorlage **12,** kann vom Durchmesser dem Reaktorinnendurchmesser, beispielsweise dem Innendurchmesser des Reaktionsbehälters **11,** entsprechen, oder auch kleiner ausgelegt werden. Im letzteren Fall wird bevorzugt seitlich an der Eisenvorlageeinrichtung eine Wandung angebracht, die ein Herabfallen von Eisen vermeidet. Diese Wandung kann Suspensions-durchlässig, beispielsweise ausgeführt als Gitter, oder Suspensions-undurchlässig sein und beispielsweise die Form einer Röhre oder eines oben offenen Quader entsprechen.

Im erfindungsgemäßen Verfahrens erfolgt die Umsetzung von zumindest Eisen, Hämatit-Keimsuspension und Eisen(II)nitratlösung in Gegenwart von zumindest einem sauerstoffhaltigen Gas bei Temperaturen von 70 bis 99°C.

Das zumindest eine sauerstoffhaltige Gas ist bevorzugt ausgewählt aus Luft, Sauerstoff, über Umgebungstemperatur erwärmte Luft oder mit Wasserdampf angereicherte Luft.

Gemäß des erfindungsgemäßen Verfahrens erfolgt die Umsetzung von zumindest Eisen, Hämatit-Keimsuspension und Eisen(II)nitratlösung derart, dass zumindest die während der Umsetzung vorhandene flüssige Phase mittels mechanischer und/oder hydraulischer Durchmischung durchmischt wird. Da sich in der flüssigen Phase suspendierter Hämatit befindet, erfolgt die mechanische und/oder hydraulische Durchmischung bevorzugt derart, dass der in der flüssigen Phase suspendierte Hämatit in der flüssigen Phase gleichmäßig verteilt bleibt und sich nicht im unteren Teil der flüssigen Phase anreichert.

Gemäß des erfindungsgemäßen Verfahrens erfolgt die Umsetzung von zumindest Eisen, Hämatit-Keimsuspension und Eisen(II)nitratlösung derart, dass sie unter einer Begasung mit zumindest einem sauerstoffhaltigen Gas mit einer Begasungsvolumen von 6 m³ Gasvolumen / m³ Ansatzvolumen / Stunde oder weniger, bevorzugt von 0,2 bis 6 m³ Gasvolumen / m³ Ansatzvolumen / Stunde, besonders bevorzugt von 0,2 bis 5 m³ Gasvolumen / m³ Ansatzvolumen / Stunde, ganz besonders bevorzugt von 0,2 bis 3 m³ Gasvolumen / m³ Ansatzvolumen / Stunde erfolgt. Die Reaktionsmischung umfasst erfindungsgemäß alle Einsatzstoffe und die daraus entstehenden festen, flüssigen und gasförmigen Produkte. Während der Umsetzung entsteht auch ein stickoxidhaltiger Stoffstrom **NOX.** In einer bevorzugten Ausführungsform wird der stickoxidhaltiger Stoffstrom **NOX** aus dem Reaktor herausgeleitet, beispielsweise über den Auslass **112** von Reaktor **1.** Das Ansatzvolumen wird erfindungsgemäß als das Gesamtvolumen der flüssigen und festen Bestandteile der Reaktionsmischung definiert, das sich zu einem jeweiligen Zeitpunkt der Umsetzung in dem Reaktionsbehälter, beispielsweise in Reaktor **1,** befindet. Das Ansatzvolumen kann beispielsweise zu jedem Zeitpunkt der Umsetzung über eine Füllstandsanzeige des Reaktors, in dem die Umsetzung durchgeführt wird, ermittelt werden.

Die Begasung mit zumindest einem sauerstoffhaltigen Gas erfolgt bevorzugt derart, dass das zumindest eine sauerstoffhaltige Gas unterhalb der Eisenvorlage, beispielsweise Vorlage **12,** in flüssige Phase der Reaktionsmischung eingebracht wird. Bevorzugt wird für die Einleitung des Gases eine Begasungseinheit, beispielsweise Begasungseinheit **13,** wie z.B. Begasungsring, Düsen, (Zwei)-Stoffstrahlern oder einer mit Löchern versehenen Rohrleitung, die sich innerhalb der Reaktionsmischung befindet, verwendet. Hierfür muss das zumindest eine sauerstoffhaltige Gas einen ausreichenden Druck aufweisen, um gegen den hydrostatischen Druck der Flüssigkeitssäule der Reaktionsmischung wirken zu können.

Während des erfindungsgemäßen Verfahrens wird auf den in der flüssigen Phase enthaltenen Hämatit-Keim das Pigment aufgebaut, wodurch eine Hämatit-Pigmentsuspension erzeugt wird, dessen Farbwerte, bevorzugt dessen a*- und b*-Werte in der Lackabtestung, sich während der Reaktion durch die beim Pigmentaufbau sich ändernden Teilchengröße und/oder -morphologie ändern. Durch Messen der Farbwerte des in der Hämatit-Pigmentsuspension enthaltenen Hämatit-Pigments wird der Zeitpunkt bestimmt, zu dem das erfindungsgemäße Verfahren abgebrochen wird. Das erfindungsgemäße Verfahren wird abgebrochen, wenn das Hämatit-Pigment in der Lackabtestung den gewünschten Farbton, bevorzugt die gewünschten a*- und b*-Werte im Purton oder in der Aufhellung, aufweist. Dies erfolgt durch Beendigung der Begasung, gegebenenfalls durch gleichzeitiges Abkühlen der Reaktionsmischung auf eine Temperatur von unter 70°C. Typische Reaktionszeiten für die erfindungsgemäße Umsetzung liegen bei 10 bis 150 Stunden, abhängig vom gewünschten Farbton.

In einer bevorzugten Ausführungsform erfolgt nach der erfindungsgemäßen Umsetzung die Abtrennung des Hämatit-Pigments von der Hämatit-Suspension nach üblichen Methoden, bevorzugt durch Filtration und/oder Sedimentation und/oder Zentrifugation. Ebenfalls bevorzugt erfolgt Waschen nach der Abtrennung erhaltenen Filterkuchens und nachfolgende Trocknung des Filterkuchens. Ebenfalls bevorzugt werden vor der Abtrennung des Hämatit-Pigments von der Hämatit-Pigmentsuspension ein oder mehrere Siebungsschritte, besonders bevorzugt mit unterschiedlichen Maschenweiten und mit absteigenden Maschenweiten, durchgeführt. Dies hat den Vorteil, dass dadurch Fremdkörper, beispielsweise Metallstücke, von der Hämatit-Pigmentsuspension abgetrennt werden, die sonst das Hämatit-Pigment verunreinigen würden.

Für die Abtrennung des Hämatit-Pigments von der Hämatit-Pigmentsuspension können alle dem Fachmann bekannten Verfahren durchgeführt werden, z.B. Sedimentation mit anschließender Abtrennung der wässrigen Phase oder Filtration über Filterpressen, beispielsweise über Membranfilterpressen.

In einer bevorzugten Ausführungsform des erfindungsgemäßen Verfahrens kann zumindest ein Sulfatsalz, beispielsweise Eisen(II)sulfat und/oder ein Alkali- oder Erdalkalisulfat, bevorzugt Eisen(II)sulfat und/oder Natriumsulfat, zur Hämatit-Pigmentsuspension während oder vor der Siebung und/oder während oder vor der Abtrennung gegeben werden. Dies hat den Vorteil, dass die Sedimentation des Hämatit-Pigments aus der Hämatit-Pigmentsuspension beschleunigt wird. Dies erleichtert die nachfolgende Abtrennung des Hämatit-Pigments.

Gegebenenfalls erfolgt anschließend zumindest eine Wäsche des so abgetrennten Sedimentes oder Filterkuchens. Gegebenenfalls erfolgt nach der Abtrennung und/oder der Wäsche eine Trocknung des so abgetrennten Hämatit-Pigments-, beispielsweise mit Filtertrocknern, Bandtrocknern, Knettrocknern, Spinflash-Trocknern, Trockenschränken oder Sprühtrocknern. Bevorzugt erfolgt die Trocknung mit Bandtrocknern, Tellertrocknern, Knettrocknern und/oder Sprühtrocknern.

Überraschenderweise wurde gefunden, dass bei dem erfindungsgemäßen Verfahren gegenüber dem Verfahren nach dem Stand der Technik, bei dem der Pigmentaufbau bei geringen Begasungsmengen ohne mechanische und/oder hydraulische Durchmischung stattfindet, deutlich mehr Hämatit-Pigment pro eingesetztem Fe(NO₃)₂ erzeugt wird. Bei dem erfindungsgemäßen Verfahren stammt im Vergleich zum Verfahren nach dem Stand der Technik ein größerer Anteil des im Hämatit-Pigments enthaltenen Fe³⁺ aus dem Eisen und ein kleinerer Anteil des im Hämatit-Pigment enthaltenen Fe³⁺ aus dem Fe(NO₃)₂. Bei dem Verfahren gemäß dem Stand der Technik, in dem die Begasungsmengen von 6 m³ Gasvolumen/m³ Ansatzvolumen / Stunde Reaktionszeit oder weniger verwendet werden, aber keine mechanische und/oder hydraulische Durchmischung erfolgt, werden üblicherweise 1,0 kg Fe₂O₃ pro kg Fe(NO₃)₂ oder weniger erzeugt. Bei dem erfindungsgemäßen Verfahren werden jedoch 1,2 kg Fe₂O₃ pro kg Fe(NO₃)₂ oder mehr, bevorzugt von 1,2 bis 2,5 kg Fe₂O₃ pro kg Fe(NO₃)₂ erzeugt. Dadurch wird das Verfahren wirtschaftlicher, da zur Herstellung weniger Eisen(II)nitratlösung benötigt wird, die im Gegensatz zum eingesetzten Eisen separat hergestellt werden muss. Darüber hinaus werden bei dem erfindungsgemäßen Verfahren durch die niedrigeren Begasungsvolumina im Vergleich zum Stand der Technik deutlich weniger Stickoxide in die Gasphase ausgetragen. Bei dem Verfahren nach dem Stand der Technik, bei dem eine hohe Begasungsmenge von größer als 6 m³ Gasvolumen/ m³ Ansatzvolumen/ Stunde Reaktionszeit an sauerstoffhaltigem Gas eingesetzt wird, aber keine mechanische und/oder hydraulische Durchmischung erfolgt, werden typischerweise 80 g nitrose Gase wie NO und NO₂ (immer berechnet als NO₂) pro Kilogramm erzeugtes Pigment oder mehr sowie 40 g Distickstoffmonoxid pro Kilogramm erzeugtes Pigment oder mehr aus der Reaktionsmischung an die Umgebungsluft abgegeben. Zusätzlich dienen die in der flüssigen Phase gelösten Stickoxide selbst als Oxidationsmittel wie das zumindest eine sauerstoffhaltige Gas, das Eisen zu Fe³⁺ oxidiert. Hierbei werden die Stickoxide, in denen der Stickstoff die Oxidationszahlen +1 bis +5 aufweist, entweder zu Stickstoff, d.h. zu N₂, der die Oxidationszahl 0 aufweist, oder zu Ammoniumverbindungen reduziert, in denen der Stickstoff die Oxidationszahl -3 aufweist. Dadurch entstehen bei dem erfindungsgemäßen Verfahren deutlich geringere Mengen an Stickoxiden und oder Ammoniumverbindungen, die aufwändig durch Gaswäschen oder andere Gas- oder Abwasserreinigungsmethoden entfernt werden müssen. Darüber hinaus wird durch die niedrigeren Begasungsvolumina im Vergleich zum Stand der Technik deutlich weniger Energie aus der auf 70 bis 99°C erhitzten Reaktionsmischung in die Gasphase ausgetragen. Da die Menge an gebildeten Fe₂O₃ pro kg Fe(NO₃)₂ bei gleicher Begasungsmenge deutlich gesteigert wird, kann dementsprechend ohne Ausbeuteverluste an Hämatit-Pigment die Menge an eingesetztem Eisennitrat bei dem Pigmentaufbau im gleichen Maße reduziert werden.

Die Erfindung betrifft außerdem ein Verfahren zur Herstellung von Eisenoxid-Rot-Pigmenten umfassend zumindest die Umsetzung von Eisen, Hämatit-Keimsuspension, enthaltend Hämatit-Keime, die eine Teilchengröße von 100 nm oder weniger und eine spezifische BET-Oberfläche von 40 m²/g bis 150 m²/g (gemessen nach DIN 66131) aufweisen, und Eisen(II)nitratlösung in Gegenwart von zumindest einem sauerstoffhaltigen Gas bei Temperaturen von 70 bis 99°C, dadurch gekennzeichnet, dass
- die Hämatit-Keimsuspension zu zumindest Eisen zugegeben wird, und
- vor der Zugabe, nach der Zugabe oder gleichzeitig zur Zugabe der Hämatit-Keimsuspension die Eisen(II)nitratlösung derart zu der Mischung aus zumindest Hämatit-Keimsuspension und Eisen zugegeben wird, dass die Konzentration an Eisen(II)nitrat von 0,1 bis 25 g / l flüssige Phase, bevorzugt von 1 bis 20 g / l flüssige Phase, berechnet auf wasserfreies Fe(NO₃)₂, beträgt,
wobei eine Suspension des Hämatit-Pigments erzeugt wird und wobei die Durchmischung mit Hilfe einer Pumpe wie oben beschrieben erfolgt.

In einer Ausführungsform wird die Umsetzung so lange durchgeführt, bis das Hämatit-Pigment den gewünschten Farbton aufweist.

In einer weiteren Ausführungsform umfasst das erfindungsgemäße Verfahren die Abtrennung des Hämatit-Pigments von der Hämatit-Pigmentsuspension nach üblichen Methoden.

In einer Ausführungsform des erfindungsgemäßen Verfahrens wird Eisen vorgelegt und dann die Hämatit-Keimsuspension zu dem Eisen zugegeben. In einer weiteren Ausführungsform des erfindungsgemäßen Verfahrens wird eine Mischung aus Eisen und Wasser vorgelegt und dann die Hämatit-Keimsuspension zu der Mischung aus Eisen und Wasser zugegeben. In einer weiteren Ausführungsform kann dabei die Temperatur der jeweils daraus resultierenden Mischung von 10 bis 99°C betragen.

In weiteren Ausführungsformen des erfindungsgemäßen Verfahrens wird nach der Zugabe oder gleichzeitig zur Zugabe der Hämatit-Keimsuspension Eisen(II)nitratlösung derart zu der Mischung aus zumindest Eisen und Hämatit-Keimsuspension zugegeben, dass die Konzentration an Eisen(II)nitrat von 0,1 bis 25 g / l flüssige Phase, bevorzugt von 1 bis 20 g / l flüssige Phase, berechnet auf wasserfreies Fe(NO₃)₂, beträgt. In einer weiteren Ausführungsformen des erfindungsgemäßen Verfahrens wird vor der Zugabe der Hämatit-Keimsuspension Eisen(II)nitratlösung derart zu zumindest Eisen zugegeben, dass die Konzentration an Eisen(II)nitrat von 0,1 bis 25 g / l flüssige Phase, bevorzugt von 1 bis 20 g / l flüssige Phase, berechnet auf wasserfreies Fe(NO₃)₂, beträgt. In einer bevorzugten Ausführungsform beträgt dabei die Temperatur der Reaktionsmischung während der Zugabe der Eisen(II)nitratlösung von 70 bis 99°C. Der Gehalt an Eisen(II)nitrat wird typischerweise indirekt über die Messung des Eisen(II)-Gehaltes über eine potentiometrischen Titration einer mit Salzsäure angesäuerten Probe der flüssigen Phase mit Cer(III)sulfat bestimmt. Die maximale Konzentration an Eisen(II)nitrat bezogen auf die flüssige Phase wird durch die Geschwindigkeit der Zugabe der Eisen(II)nitratlösung zu der Mischung aus zumindest Eisen und Hämatit-Keimsuspension bestimmt. Während des erfindungsgemäßen Verfahrens wird Eisen(II)nitrat durch die Reaktion mit dem Eisen verbraucht. In einer bevorzugten Ausführungsform wird das erfindungsgemäße Verfahren derart durchgeführt, dass von 70 bis 100%, weiter bevorzugt von 80 bis 100%, der gesamten Reaktionszeit die Konzentration an Eisen(II)nitrat von 0,1 bis 25 g / l flüssige Phase, bevorzugt von 1 bis 20 g / l flüssige Phase, berechnet auf wasserfreies Fe(NO₃)₂, beträgt. In einer weiteren bevorzugten Ausführungsform wird das erfindungsgemäße Verfahren derart durchgeführt, dass von 70 bis 100%, weiter bevorzugt von 80 bis 100%, des Bereiches der Reaktionszeit von 0 bis 50 Stunden die Konzentration an Eisen(II)nitrat von 0,1 bis 25 g / l flüssige Phase, bevorzugt von 1 bis 20 g / l flüssige Phase, berechnet auf wasserfreies Fe(NO₃)₂, beträgt. Als Beginn der Reaktionszeit wird erfindungsgemäß der Beginn der Zugabe der Eisen(II)nitratlösung und als Ende der Reaktionszeit die Beendigung der Begasung mit dem zumindest einen sauerstoffhaltigen Gas definiert. Der Beginn der Zugabe der Eisen(II)nitratlösung wird erfindungsgemäß definiert als der Zeitpunkt, an dem bereits 1 Gew.% der gesamten Menge an Eisen(II)nitrat zu der Mischung aus zumindest Eisen und Hämatit-Keimsuspension zugegeben wurde. Die Beendigung der Begasung mit dem zumindest einen sauerstoffhaltigen Gas wird erfindungsgemäß definiert als der Zeitpunkt, an dem die Begasung mit dem zumindest einen sauerstoffhaltigen Gas unterhalb von 0,1 m³ Gasvolumen / m³ Ansatzvolumen / Stunde beträgt.

Überraschenderweise wurde gefunden, dass bei dem erfindungsgemäßen Verfahren gegenüber dem Verfahren nach dem Stand der Technik, bei dem die Eisen(II)nitratlösung am Anfang des Pigmentaufbaus auf einmal zugegeben wird, deutlich mehr Hämatit-Pigment pro eingesetztem Fe(NO₃)₂ erzeugt wird. Bei dem erfindungsgemäßen Verfahren stammt im Vergleich zum Verfahren nach dem Stand der Technik ein größerer Anteil des im Hämatit-Pigment enthaltenen Fe³⁺ aus dem Eisen und ein kleinerer Anteil des im Hämatit-Pigment enthaltenen Fe³⁺ aus dem Fe(NO₃)₂. Bei dem Verfahren gemäß dem Stand der Technik, bei dem die Eisen(II)nitratlösung auf einmal der Mischung aus Hämatit-Keimsuspension, Eisen und Wasser zugegeben wird und die Begasungsmenge beispielsweise 10 m³ Luft / m³ Ansatzvolumen / Stunde beträgt, werden üblicherweise 1,7 kg Fe₂O₃ pro kg Fe(NO₃)₂ oder weniger erzeugt. Wird jedoch die Begasungsmenge beispielsweise auf 2 m³ Luft / m³ Ansatzvolumen / Stunde reduziert, werden nur 0,6 kg Fe₂O₃ pro kg Fe(NO₃)₂ oder weniger gebildet. Erfolgt der Pigmentaufbau erfindungsgemäß unter mechanischer und/oder hydraulischer Durchmischung und einer Begasungsmenge von ebenfalls 2 m³ Luft / m³ Ansatzvolumen/Stunde und wird die Eisen(II)nitratlösung am Anfang des Pigmentaufbaus auf einmal zugegeben, werden, jedoch 1,2 kg Fe₂O₃ pro kg Fe(NO₃)₂ oder mehr, bevorzugt von 1,2 bis 2,2 kg Fe₂O₃ pro kg Fe(NO₃)₂ erzeugt.

In einer weiteren Ausführungsform umfasst das Verfahren zur Herstellung von Eisenoxid-Rot-Pigmenten die Umsetzung von Eisen, Hämatit-Keimsuspension, enthaltend Hämatit-Keime, die eine Teilchengröße von 100 nm oder weniger und eine spezifische BET-Oberfläche von 40 m²/g bis 150 m²/g (gemessen nach DIN 66131) aufweisen, und Eisen(II)nitratlösung in Gegenwart von zumindest einem sauerstoffhaltigen Gas bei Temperaturen von 70 bis 99°C, dadurch gekennzeichnet, dass die Umsetzung
- unter Durchmischung der flüssigen Phase mittels hydraulischer Durchmischung und
- die Begasung mit zumindest einem sauerstoffhaltigen Gas mit einer Begasungsvolumen von 6 m³ Gasvolumen / m³ Ansatzvolumen / Stunde oder weniger, bevorzugt von 0,2 bis 6 m³ Gasvolumen / m³ Ansatzvolumen / Stunde, besonders bevorzugt von 0,2 bis 5 m³ Gasvolumen / m³ Ansatzvolumen / Stunde, ganz besonders bevorzugt von 0,2 bis 3 m³ Gasvolumen / m³ Ansatzvolumen / Stunde erfolgt und
- die Hämatit-Keimsuspension zu zumindest Eisen zugegeben wird und
- vor der Zugabe, nach der Zugabe oder gleichzeitig zur Zugabe der Hämatit-Keimsuspension die Eisen(II)nitratlösung derart zu der Mischung aus zumindest Hämatit-Keimsuspension und Eisen zugegeben wird, dass die Konzentration an Eisen(II)nitrat von 0,1 bis 25 g / l flüssige Phase, bevorzugt von 1 bis 20 g / l flüssige Phase, berechnet auf wasserfreies Fe(NO₃)₂, beträgt,
wobei eine Suspension des Hämatit-Pigments erzeugt wird und wobei die Durchmischung mit Hilfe einer Pumpe wie oben beschrieben erfolgt. Überraschenderweise werden bei dieser Ausführungsform des erfindungsgemäßen Verfahrens 1,5 kg Fe₂O₃ pro kg Fe(NO₃)₂ oder mehr, bevorzugt von 1,8 bis 3 kg Fe₂O₃ pro kg Fe(NO₃)₂ erzeugt. Außerdem werden bei dieser Ausführungsform typischerweise 20 g nitrose Gase wie NO und NO₂ (immer berechnet als NO₂) pro Kilogramm erzeugtes Hämatit-Pigment oder weniger sowie 20 g Distickstoffmonoxid pro Kilogramm erzeugtes Hämatit-Pigment oder weniger aus der Reaktionsmischung an die Umgebungsluft abgegeben.

### Beispiele und Methoden:

### Titration Eisen(II) und Eisen(III)bestimmung:

Der Gehalt an Eisen(II)nitrat kann indirekt über die Messung des Eisen(II)-Gehaltes über eine potentiometrischen Titration einer mit Salzsäure angesäuerten Probenlösung mit Cer(III)sulfat bestimmt werden.

### NOₓ-Messung

NOₓ-Messungen wurden mit einem Gasanalysator PG 250 der Firma Horriba, (Chemielumineszenz-Verfahren) durchgeführt. Angaben über NOₓ-Bildung wurden im Verhältnis zur Pigmentausbeute angegeben (gerechnet als NO₂, in g NO₂ / kg Pigment). Die NOₓ-Emission, die bei der Herstellung der Ausgangsstoffe Hämatit-Keim und Eisennitrat gebildet wurden, sind nicht mit inbegriffen.

### N₂O-Messung

Lachgasmessungen wurden über eine quantitative gaschromatographische Bestimmung und/oder über Infrarotmessung durchgeführt. Angaben über N₂O-Bildung wurden im Verhältnis zur Pigmentausbeute angegeben (g N₂O/ kg Pigment). Die N₂O-Emission, die bei der Herstellung der Ausgangsstoffe Hämatit-Keim und Eisennitrat gebildet wurden, sind nicht mit inbegriffen.

### Beispiele 1-8:

Die Beispiele 1 bis 8 wurden in dem gleichen Reaktor in vergleichbarem Maßstab (Einsatzmengen Eisen zwischen 55 und 60 kg) durchgeführt, wobei die identischen Bedingungen, sowie die identischen relativen Verhältnisse zwischen den Mengen der Einsatzstoffe und der Volumina der Lösungen eingestellt wurden. Das eingesetzte Eisen liegt generell im Überschuss vor. Als Parameter wurden variiert: Begasungsmenge pro Volumen; Rühren: ja oder nein, Rührgeschwindigkeit, Umpumpen: ja oder nein, Umpumpmenge, Strömungsgeschwindigkeit. Diese Parameter sind in Tabelle 1 für jedes Beispiel angegeben.

### Eine detaillierte Versuchsbeschreibung ist nachfolgend für Beispiel 7 angegeben.

55 kg Eisenblech mit einer Dicke von etwa 1 mm wurden in einem 1 m³-Reaktor, ausgestattet mit Siebboden (Maschenweite ca. 10 mm), Begasungsring (am Reaktorboden), Umpumpung und Schrägblattrührer vorgelegt. Der Begasungsring und der Rührer sind unterhalb des Siebbodens angebracht, der Auslass der Umpumpung seitlich an der Eisenschüttung, die Ansaugung der Umpumpung am Reaktorboden. Das Eisenblech mit einer Schüttdichte von 0,6-0,8 kg/l wurde auf dem Siebboden gleichmäßig verteilt. Anschließend wurde Wasser, Eisen(II)nitratlösung (entsprechend 25,2 kg Fe(NO₃)₂ berechnet als wasserfreies Fe(NO₃)₂, Fe(NO₃)₂-Konzentration 120 g/l,) und Hämatit-Keimsuspension (entsprechend 16,1 kg Fe₂O₃, Konzentration 130 g/l), in den Mengen zugeben, so dass ein Ansatzvolumen von 700 Liter erreicht wird und die Konzentration an Keim (gerechnet als wasserfreies Fe₂O₃) 23 g/l beträgt und die Konzentration an Eisennitrat (berechnet als wasserfreies Fe(NO₃)₂) 36 g/l beträgt. Das Gemisch wurde mit eingeschaltetem Rührer (140 upm, 3,7 m/s, Schrägblattrührer, 50 cm Durchmesser) und eingeschalteter Umpumpung auf 85°C aufgeheizt und nach Erreichen der Temperatur mit 2 m³ Luft / Ansatzvolumen / Stunde für 70 Stunden begast, bis eine Eisen(II)nitrat-Konzentration kleiner als 0,1 g/l Reaktionsmischung erreicht wurde. Das Rühren und Umpumpen wurde während der gesamten Reaktionsdauer fortgesetzt. Nach Beendigung der Begasung wurde eine Eisen(II)nitrat-Konzentration von <0,1 g/l flüssige Phase gemessen. Dann wurde die Reaktionsmischung über eine Filterpresse filtriert und das erhaltene Hämatit-Pigment mit Wasser gewaschen. Das Hämatit-Pigment wurde nachfolgend bei 80°C bis zu einer Restfeuchte kleiner 5 Gew.% getrocknet. Anschließend wurde der getrocknete Filterkuchen mechanisch mit einem Schroter zerkleinert. Das Hämatit-Pigment wurde so in Pulverform in einer Ausbeute von 67,0 kg erhalten. Die eingesetzte Keimmenge als Fe₂O₃ beträgt 16,1 kg, die Menge an neu gebildeten Fe₂O₃ (67,0 kg - 16,1 kg) beträgt 50,9 kg. Die Menge an umgesetzten Eisen(II)nitrat beträgt 25,2 kg. Hieraus errechnet sich ein Quotient von 50,9 kg/25,2 kg = 2,0 kg Fe₂O₃ pro kg Fe(NO₃)₂.

In Tabelle 1 sind die variierten Verfahrensparameter für die Beispiele 1-3 (Vergleichsbeispiele), die Beispiele 4-6 (Referenzbeispiele) und die Beispiele 7 und 8 (erfindungsgemäß) sowie der Quotient aus kg Fe₂O₃ pro kg Fe(NO₃)₂ angegeben. In Tabelle 2 sind die Ergebnisse für die Mengen an gebildeten Abgasen NOₓ und N₂O aufgeführt.

**Tabelle 1:**

| **Beispiel** | **Rühren** | **Umpumpung** | **Begasungsmenge pro Volumen [m³/m³/h]** | **kg Fe₂O₃ gebildet** / **kg Fe(NO₃)₂ verbraucht** |
|---|---|---|---|---|
| 1 (zum Vergleich) | Nein | Nein | 1 | 0,3 |
| 2 (zum Vergleich) | Nein | Nein | 2 | 0,6 |
| 3 (zum Vergleich) | Nein | Nein | 10 | 1,7 |
| 4 | 50 UPM (1,3 m/s Umfangsgeschwindigkeit) (Leistungseintrag 0,19 kW/m³) | Nein | 2 | 1,3 |
| 5 | 80 UPM (2,1 m/s Umfangsgeschwindigkeit, Leistungseintrag 0,3 kW/m³) | Nein | 2 | 1,5 |
| 6 | 140 UPM (3,7 m/s Umfangsgeschwindigkeit, Leistungseintrag 0,71 kW/m³) | Nein | 2 | 1,8 |
| 7 | 140 UPM (3,7 m/s Umfangsgeschwindigkeit, Leistungseintrag 0,71 kW/m³) | 12 m³/ h | 2 | 2,0 |
| 8 | Nein | 12m³/h | 2 | 1,4 |

**Tabelle 2:**

| **Beispiel** | **NO/NO₂-Menge [berechnet als NO₂ in g/kg Hämatit-Pigment]** | **N₂O-Menge [in g/kg Hämatit-Pigment]** |
|---|---|---|
| 3 (zum Vergleich) | 114 | 57 |
| 7 | 9 | 14 |

### Beispiele 9-12:

Die Beispiele 9 (Referenzbeispiel) sowie 11 und 12 wurden in dem gleichen Reaktor in vergleichbarem Maßstab (Einsatzmengen Eisen zwischen 55 und 60 kg) durchgeführt, wobei die identischen Bedingungen, sowie die identischen relativen Verhältnisse zwischen den Mengen der Einsatzstoffe und der Volumina der Lösungen eingestellt wurden. Das eingesetzte Eisen liegt generell im Überschuss vor. Als Parameter wurden variiert: Begasungsmenge pro Volumen; Rühren: ja oder nein, Umpumpen: ja oder nein, Dosierung Eisen(II)nitratlösung: ja oder nein Diese Parameter sind in Tabelle 1 für jedes Beispiel angegeben.

Eine detaillierte Versuchsbeschreibung ist nachfolgend für Beispiel 11 angegeben. 55 kg Eisenblech mit einer Dicke von etwa 1 mm wurden in einem 1 m³-Reaktor, ausgestattet mit Siebboden (Maschenweite ca. 10 mm), Begasungsring (am Reaktorboden), Umpumpung und Schrägblattrührer vorgelegt. Der Begasungsring und der Rührer sind unterhalb des Siebbodens angebracht, der Auslass der Umpumpung seitlich an der Eisenschüttung, die Ansaugung der Umpumpung am Reaktorboden. Das Eisenblech wurde auf dem Siebboden gleichmäßig verteilt. Anschließend wird Wasser, und Hämatit-Keimsuspension (entsprechend 16,1 kg Fe₂O₃ gerechnet als wasserfreies Fe₂O₃) in den Mengen zugeben, so dass ein Volumen von 490 Liter erreicht wird. Das Gemisch wurde mit eingeschaltetem Rührer (140 UPM, 3,7 m/s, Schrägblattrührer, 50 cm Durchmesser) und eingeschalteter Umpumpung (12 m³/m³ Ansatzvolumen/Stunde) auf 85°C aufgeheizt und nach Erreichen dieser Temperatur mit 2 m³ Luft /m³ Ansatzvolumen/Stunde begast. Nach Erreichen der Temperatur von 85°C wurde eine Eisen(II)nitrat-Lösung (210 Liter, Konzentration 120 g/l, berechnet auf wasserfreies Fe(NO₃)₂) innerhalb von 24 h derart zudosiert, dass die Fe(NO₃)₂-Konzentration 20 g/l flüssige Phase bis zum Ende der Fe(NO₃)₂-Zugabe nicht überschreitet. Das Volumen nach erfolgter Zudosierung der Eisen(II)nitrat Lösung betrug 700 Liter. Während der Zugabe der Eisen(II)nitrat-Lösung und danach für weitere 46 h wurde die Begasung fortgeführt, sodass insgesamt 70 h begast wurde. Das Rühren und Umpumpen wurde während der gesamten Reaktionsdauer fortgesetzt. Nach 70 h Begasung wurde eine Eisen(II)nitrat-Konzentration von <0,1 g/l Reaktionsmischung erreicht. Dann wurde die Reaktionsmischung über eine Filterpresse filtriert und das erhaltene Hämatit-Pigment mit Wasser gewaschen. Das Hämatit-Pigment wurde nachfolgend bei 80°C bis zu einer Restfeuchte kleiner 5 Gew.% getrocknet. Anschließend wurde der getrocknete Filterkuchen mechanisch mit einem Schroter zerkleinert. Das Hämatit-Pigment wurde so in Pulverform in einer Ausbeute von 78,9 kg erhalten.

Die eingesetzte Keimmenge als Fe₂O₃ betrug 16,1 kg, die Menge an neu gebildeten Fe₂O₃ (76 kg - 16,1 kg) beträgt 59,9 kg. Die Menge an umgesetzten Eisen(II)nitrat betrug 25,2 kg. Hieraus errechnet sich ein Quotient von 59,9 kg/25,2 kg = 2,4 Fe₂O₃ pro kg Fe(NO₃)₂.

In Tabelle 3 sind die Quotienten aus kg Fe₂O₃ pro kg Fe(NO₃)₂ für die Beispiele 7 sowie die Ergebnisse für die Mengen an gebildeten Abgasen NOₓ und N₂O aufgeführt.

**Tabelle 3**

| **Beispiel** | **Dosierung Eisen(II)nitrat** | **kg Fe₂O₃ gebildet** / **kg Fe(NO₃)₂ verbraucht** |
|---|---|---|
| 7 | Gesamtmenge wurde auf einmal zugegeben, Startkonzentration: 36 g/l | 2,0 |
| 11 | Dosierung, sodass Eisen(II)nitrat-Konzentration unter 20 g/l | 2,4 |

**Tabelle 4:**

| **Beispiel** | **Durchmischung** | **Begasung pro Volumen m³/m³/h** | **Fe(NO₃)₂ Zugabe** | **NO/NO₂ berechnet als NO₂ in g/kg Pigment** | **N₂O in g/kg Pigment** |
|---|---|---|---|---|---|
| 3 | Keine | 10 (Luft) | Vollständig in Vorlage | 114 | 57 |
| 9 | Keine | 10 (Luft) | Unter 20 g/l durch langsame Zugabe | 73 | 46 |
| 7 | Rührer: 140 UPM (3,7 m/s) Umpumpung: 12 m³/ /h | 2 (Luft) | Vollständig in Vorlage | 9 | 14 |
| 11 | Rührer: 140 UPM (3,7 m/s) Umpumpung: 12 m³/ h | 2 (Luft) | Unter 20 g/l durch langsame Zugabe | 5 | 10 |
| 12 | Umpumpung: 12 m³/ h | 6 (Luft) | Vollständig in Vorlage | 78 | 44 |

Ein Umpumpmenge von 12 m³ / Stunde entspricht im Testreaktor einer Umpumpmenge von 17 Ansatzvolumina / h und einer Strömungsgeschwindigkeit an der Austrittsstelle von 1,4 m/s. Ein Umpumpmenge von 6 m³/ Stunde entspricht im Testreaktor einer Umpumpmenge von 8,5 Ansatzvolumina / h und einer Strömungsgeschwindigkeit an der Austrittsstelle von 0,7 m/s.

## Patentansprüche

1. Verfahren zur Herstellung von Hämatit-Pigmenten, umfassend zumindest die Umsetzung von zumindest Eisen mit einer wässrigen Hämatit-Keimsuspension, enthaltend Hämatit-Keime, die eine Teilchengröße von 100 nm oder weniger und eine spezifische BET-Oberfläche von 40 m²/g bis 150 m²/g (gemessen nach DIN 66131) aufweisen, und einer Eisen(II)nitratlösung, in Gegenwart von zumindest einem sauerstoffhaltigen Gas bei Temperaturen von 70 bis 99°C, wobei eine Hämatit-Pigmentsuspension erzeugt wird, **dadurch gekennzeichnet, dass** die Umsetzung unter Durchmischung der flüssigen Phase mittels hydraulischer Durchmischung mit Hilfe einer Pumpe erfolgt, wobei man die flüssige Phase aus dem Reaktor an einem Auslass entnimmt und dem Reaktor wieder an anderer Stelle an einem Einlass zuführt und die Begasung mit zumindest einem sauerstoffhaltigen Gas mit einer Begasungsvolumen von 6 m³ Gasvolumen / m³ Ansatzvolumen / Stunde oder weniger, bevorzugt von 0,2 bis 6 m³ Gasvolumen / m³ Ansatzvolumen / Stunde, besonders bevorzugt von 0,2 bis 5 m³ Gasvolumen / m³ Ansatzvolumen / Stunde, ganz besonders bevorzugt von 0,2 bis 3 m³ Gasvolumen / m³ Ansatzvolumen / Stunde, erfolgt.

2. Verfahren nach Anspruch 1, **dadurch gekennzeichnet, dass** die Umsetzung so lange durchgeführt wird, bis das Hämatit-Pigment den gewünschten Farbton aufweist.

3. Verfahren nach einem der Ansprüche 1 oder 2, umfassend weiterhin die Abtrennung des Hämatit-Pigments von der Reaktionsmischung nach üblichen Methoden.

4. Verfahren nach einem der Ansprüche 1 bis 3, **dadurch gekennzeichnet, dass** das in der Hämatit-Pigmentsuspension enthaltene Hämatit-Pigment die Modifikation α-Fe₂O₃ aufweist.

5. Verfahren nach einem der Ansprüche 1 bis 4, **dadurch gekennzeichnet, dass** die hydraulische Durchmischung mit einer Umpumpmenge von 0,1 bis 20 Ansatzvolumina/Stunde erfolgt.

6. Verfahren nach einem der Ansprüche 1 bis 5, **dadurch gekennzeichnet, dass** die hydraulische Durchmischung in einem Reaktor mit zumindest einem Einlass und zumindest einem Auslass für die Reaktionsmischung derart erfolgt, dass die Strömungsgeschwindigkeit am Einlass des Reaktors mindestens 0,05 m/s, bevorzugt mindestens 0,06 m/s, beträgt.

7. Verfahren nach einem der Ansprüche 1 bis 6, wobei
• die Hämatit-Keimsuspension zu zumindest Eisen zugegeben wird, und
• vor der Zugabe, nach der Zugabe oder gleichzeitig zur Zugabe der Hämatit-Keimsuspension die Eisen(II)nitratlösung derart zu der Mischung aus zumindest Hämatit-Keimsuspension und Eisen zugegeben wird, dass die Konzentration an Eisen(II)nitrat von 0,1 bis 25 g / l flüssige Phase , bevorzugt von 1 bis 20 g / l flüssige Phase, berechnet auf wasserfreies Fe(NO₃)₂, beträgt.

## Claims

1. Process for producing haematite pigments, comprising at least the reaction of at least iron with an aqueous haematite nucleus suspension containing haematite nuclei which have a particle size of 100 nm or less and a specific BET surface area of from 40 m²/g to 150 m²/g (measured in accordance with DIN 66131) and an iron(II) nitrate solution in the presence of at least one oxygen-containing gas at temperatures of from 70 to 99°C, producing a haematite pigment suspension, **characterized in that** the reaction is carried out with mixing of the liquid phase by means of hydraulic mixing by means of a pump, with the liquid phase being taken from the reactor at an outlet and fed back into the reactor at another place via an inlet, and the introduction of at least one oxygen-containing gas is carried out with a gas introduction volume of 6 m³ of gas volume / m³ of batch volume / hour or less, preferably from 0.2 to 6 m³ of gas volume / m³ of batch volume / hour, particularly preferably from 0.2 to 5 m³ of gas volume / m³ of batch volume / hour, very particularly preferably from 0.2 to 3 m³ of gas volume / m³ of batch volume / hour.

2. Process according to Claim 1, **characterized in that** the reaction is carried out until the haematite pigment has the desired colour shade.

3. Process according to either of Claims 1 and 2 which further comprises the separation of the haematite pigment from the reaction mixture by conventional methods.

4. Process according to any of Claims 1 to 3, **characterized in that** the haematite pigment present in the haematite pigment suspension has the α-Fe₂O₃ modification.

5. Process according to any of Claims 1 to 4, **characterized in that** the hydraulic mixing is carried out at a pumped circulation volume of from 0.1 to 20 batch volumes/hour.

6. Process according to any of Claims 1 to 5, **characterized in that** the hydraulic mixing is carried out in a reactor having at least one inlet and at least one outlet for the reaction mixture in such a way that the flow velocity at the inlet of the reactor is at least 0.05 m/s, preferably at least 0.06 m/s.

7. Process according to any of Claims 1 to 6, wherein
• the haematite nucleus suspension is added to at least iron and
• the iron(II) nitrate solution is added, either before the addition, after the addition or simultaneously with the addition of the haematite nucleus suspension, to the mixture of at least haematite nucleus suspension and iron in such a way that the concentration of iron(II) nitrate is from 0.1 to 25 g/l of liquid phase, preferably from 1 to 20 g/l of liquid phase, calculated on the basis of anhydrous Fe(NO₃)₂.

## Revendications

1. Procédé de fabrication de pigments d'hématite, comprenant au moins la mise en réaction d'au moins du fer avec une suspension aqueuse de germes d'hématite, contenant des germes d'hématite qui présentent une taille de particule de 100 nm ou moins et une surface spécifique BET de 40 m²/g à 150 m²/g (mesurée selon DIN 66131), et d'une solution de nitrate de fer (II), en présence d'au moins un gaz contenant de l'oxygène à des températures de 70 à 99 °C, une suspension de pigment d'hématite étant formée, **caractérisé en ce que** la réaction a lieu avec mélange de la phase liquide par mélange hydraulique à l'aide d'une pompe, la phase liquide étant soutirée du réacteur au niveau d'une sortie et réintroduite dans le réacteur à un autre emplacement au niveau d'une entrée, et le gazage ayant lieu avec au moins un gaz contenant de l'oxygène avec un volume de gazage de 6 m³ de volume de gaz/m³ de volume de préparation/heure ou moins, de préférence de 0,2 à 6 m³ de volume de gaz/m³ de volume de préparation/heure, de manière particulièrement préférée de 0,2 à 5 m³ de volume de gaz/m³ de volume de préparation/heure, de manière tout particulièrement préférée de 0,2 à 3 m³ de volume de gaz/m³ de volume de préparation/heure.

2. Procédé selon la revendication 1, **caractérisé en ce que** la réaction est réalisée jusqu'à ce que le pigment d'hématite présente la teinte souhaitée.

3. Procédé selon l'une quelconque des revendications 1 ou 2, comprenant en outre la séparation du pigment d'hématite du mélange réactionnel par des méthodes usuelles.

4. Procédé selon l'une quelconque des revendications 1 à 3, **caractérisé en ce que** le pigment d'hématite contenu dans la suspension de pigment d'hématite présente la forme α-Fe₂O₃.

5. Procédé selon l'une quelconque des revendications 1 à 4, **caractérisé en ce que** le mélange hydraulique a lieu avec une quantité pompée de 0,1 à 20 volumes de préparation/heure.

6. Procédé selon l'une quelconque des revendications 1 à 5, **caractérisé en ce que** le mélange hydraulique a lieu dans un réacteur comprenant au moins une entrée et au moins une sortie pour le mélange réactionnel de telle sorte que la vitesse d'écoulement à l'entrée du réacteur soit d'au moins 0,05 m/s, de préférence d'au moins 0,06 m/s.

7. Procédé selon l'une quelconque des revendications 1 à 6, dans lequel
- la suspension de germes d'hématite est ajoutée au moins à du fer, et
- avant l'ajout, après l'ajout ou simultanément à l'ajout de la suspension de germes d'hématite, la solution de nitrate de fer (II) est ajoutée au mélange d'au moins la suspension de germes d'hématite et du fer de telle sorte que la concentration en nitrate de fer (II) soit de 0,1 à 25 g/l de phase liquide, de préférence de 1 à 20 g/l de phase liquide, calculée par rapport au Fe(NO₃)₂ anhydre.
